# EUROPÄISCHE PATENTSCHRIFT

(11) **EP 1 965 483 B1**
(45) Veröffentlichungstag und Bekanntmachung des Hinweises auf die Patenterteilung: **08.07.2015**
(21) Anmeldenummer: 07003991.2
(22) Anmeldetag: 27.02.2007
(51) Int. Cl.: H02J 3/38, H02J 9/04

(54) **Schaltung zur Verbindung einer Energieerzeugungsanlage mit dem Stromnetz**
Circuit for connecting an energy generation unit to the power grid
Circuit pour la connexion d'une installation de génération d'énegie au réseau électrique

(43) Veröffentlichungstag der Anmeldung: 03.09.2008
(73) Patentinhaber: SMA Solar Technology AG, 34266 Niestetal (DE)
(72) Erfinder: Krämer, Thomas, 34369 Hofgeismar (DE); Rothert, Martin, 34266 Niestetal (DE); Wachenfeld, Volker, 34369 Hofgeismar (DE); Falk, Andreas, 34131 Kassel (DE)
(74) Vertreter: Lahnor, Peter

(56) Entgegenhaltungen:
- WO-A-03/077398
- US-A1- 2002 143 438
- US-B1- 6 304 006

## Beschreibung

Die Erfindung betrifft eine Ersatzstromanlage, die als USV-Anlage ausgeführt ist, mit einer Eigenerzeugungsanlage und mit einer Netzüberwachungseinrichtung.

Es sind Eigenerzeugungsanlagen für elektrische Energie wie Solargeneratoren, Windenergieanlagen mit PM-Generator, drehzahlvariable Verbrennungsmotoren oder Brennstoffzellen, deren in ein Netz eingespeiste Leistung stark variiert, bekannt. Für solche Eigenerzeugungsanlagen gelten häufig attraktive Sondertarife, so dass es für den Betreiber solcher Anlagen wirtschaftlich immer lohnender wird, den erzeugten Strom ins öffentliche Versorgungsnetz einzuspeisen. Die Abrechnung von erzeugter und verbrauchter Energie erfolgt aufgrund der unterschiedlichen Tarife in der Regel durch unterschiedliche Zähler. Beim Parallelbetrieb mit dem öffentlichen Netz müssen hierbei besondere Sicherheits- und Anschlussbedingungen berücksichtigt werden.

Bekannt ist auch die sogenannte Netzüberwachung, die von hoher Bedeutung ist. Eine Eigenerzeugungsanlage muss nämlich erkennen, wenn das öffentliche Netz ausfällt, und dann ihren Betrieb einstellen. Sie darf dann nicht weiter ins das Netz einspeisen, weil eventuell bei Wartungsarbeiten im öffentlichen Netz eine Personengefährdung eintreten kann, wenn ein Netzabschnitt freigeschaltet wurde und die Eigenerzeugungsanlage in diesem Abschnitt dennoch weiter arbeitet. Bekannt sind Netzüberwachungsverfahren, die in passive und aktive Verfahren unterteilt werden. Passive Verfahren werten nur die Messwerte von einphasiger und dreiphasiger Netzspannung und Netzfrequenz aus. Aktive Verfahren zeichnen sich dadurch aus, dass sie durch Strom- oder Spannungsverzerrungen das Netz derart beeinflussen, dass aus der Antwort auf die Netzparameter bzw. die Netzimpedanz geschlossen werden kann. Durch eine Stromverzerrung erhält man eine Spannungsantwort und umgekehrt durch eine Spannungsverzerrung eine Stromantwort.

Im sogenannten Netzbetrieb muss somit eine Netzüberwachung wirksam sein. Im sogenannten Inselnetzbetrieb, bei der die Verbindung zum öffentlichen Netz unterbrochen ist und nur die Verbraucher eines definierten vorbekannten Abschnitts weiter versorgt werden, ist es bekannt, die Netzüberwachung abzuschalten. Dies erfolgt, weil die Netzimpedanz während des Netzbetriebs deutlich geringer ist als die Impedanz im Inselnetzbetrieb. Zudem wird bei einem solchen Vorgehen die modulare Erweiterbarkeit erleichtert, da sich bei einer modularen Erweiterung die Netzimpedanz des Inselnetzes verändert. Fehlabschaltungen, insbesondere bei größeren Lastsprüngen, der internen Netzüberwachung der Eigenerzeugungsanlage, die auf die veränderten Netzparameter zurückzuführen wären, werden in vorteilhafter Weise vermieden. Das gesamte System wird dadurch stabiler, insbesondere wenn es als Inselnetz betrieben wird.

Bekannt sind Eigenerzeugungsanlagen, bei der die elektrischen Verbraucher weiter versorgt werden, wenn das öffentliche Energieversorgungsnetz ausfällt. Hierzu sind Zusatzeinrichtungen erforderlich.

Eine Zusatzeinrichtung in diesem Sinne ist eine Funktionseinheit, die der Betreiber installieren muss, um eine vorhandene Eigenerzeugungsanlage als Ersatzstromversorgung zu ertüchtigen.

In vorteilhafter Weise ist bei einem Anstieg der elektrischen Verbraucher, die mit einer Ersatzstromversorgung versorgt werden sollen, das System nur durch Hinzufügen weiterer Komponenten modular erweiterbar, ohne dass bestimmte elektrische Verbraucher einer bestimmten Funktionseinheit der Zusatzeinrichtung zugeordnet sein müssen.

Damit eine unterbrechungsfreie Versorgung der Verbraucher gewährleistet werden kann, ist es zweckmäßig, die Ersatzstromanlage so zu betreiben, dass sie in einem Ladebetrieb, bei dem ein öffentliches Netz vorhanden ist, und im Endladebetrieb, bei dem ein öffentliches Netz nicht vorhanden ist, immer im gleichen Regelmodus betrieben wird, so dass keine Unterbrechung zur Reglerumschaltung notwendig ist. Das gleiche gilt für den Fall, dass das öffentliche Energieversorgungsnetz wiederkehrt.

Wenn Eigenerzeugungsanlagen an Netzausläufern installiert werden, können sich bei hoher Einspeisung und kleinem Verbrauch in diesem Netzausläufer unzulässig hohe Netzspannungen ergeben. Die Zusatzeinrichtung kann nun dazu genutzt werden, in solchen Momenten Energie aufzunehmen und die Netzspannung entsprechend abzusenken. Dadurch kann das Netz so stabilisiert werden, dass auch bei Netzausläufern, Eigenerzeugungsanlagen installiert werden können, was ansonsten nicht möglich wäre.

Auf der anderen Seite kann an diesen Netzausläufern bei einem sehr hohen Verbrauch, die Netzspannung unzulässig niedrige Werte erreichen. Die Zusatzeinrichtung kann auch hier genutzt werden, um die hohen Verbrauchsspitzen aus der Batterie zu decken. Die Netzspannung am Verbrauchsknoten kann somit auch bei größeren elektrischen Verbrauchern noch stabil gehalten werden.

Bekannt sind netzparallele Eigenerzeugungsanlagen, die zusätzlich als Ersatzstromversorgungen nutzbar sind.

Aus der EP 0 817 350 A2 ist eine separate USV-Anlage mit einem Batterieladegerät und einem Batteriewechselrichter bekannt. Diese Anlage ist eine sogenannte Online USV-Anlage.

Dieses System wird derart betrieben, dass eine Ersatzstromversorgung dadurch erfolgt, dass im Falle eines Ausfalls des öffentlichen Energieversorgungsnetzes die Eigenerzeugungsanlage vom Netz getrennt wird. Eine zusätzliche Steckdose wird dann mit elektrischer Energie versorgt. Ein Wechselrichter, der die Spannung an dieser Steckdose zur Verfügung stellt, wird dann durch eine Batterie versorgt. Die Batterie wird von einem Batterieladegerät geladen, das entweder aus dem öffentlichen Energieversorgungsnetz oder von den Eigenerzeugungsanlagen versorgt wird.

Die hierfür ausgebildeten Eigenerzeugungsanlagen sind so ausgeführt, dass sie nach einem Umschaltvorgang auch im Inselnetz weiterbetrieben werden können. An dieses Inselnetz ist nur das Batterieladegerät angeschlossen.

Im Falle eines Ausfalls des öffentlichen Netzes müssen manuell elektrische Verbraucher an die zusätzliche Steckdose angeschlossen werden, was einerseits unkomfortabel ist und andererseits wegen der Stromunterbrechung in einigen Fällen höchst unerwünscht ist.

Wenn elektrische Verbraucher immer über die zusätzliche Steckdose versorgt werden, müssen Verluste, die im Batterieladegerät und im zusätzlichen Wechselrichter entstehen, im Kauf genommen werden. In diesem Fall wird die Anlage als sogenannte Online USV Anlage betrieben. Falls die Online USV Anlage defekt ist, müssen die elektrischen Verbraucher, die über die Anlage versorgt wurden über eine zusätzliche Umschalteinrichtung mit dem öffentlichen Energieversorgungsnetz verbunden werden.

Eine gesicherte Stromversorgung ist bei dieser Lösung für die zugeordneten Verbraucher gegeben.

Diese USV-Anlage hat zudem weitere Nachteile. Wenn die Anlage als Online USV-Anlage betrieben wird, müssen zusätzliche Wandlungsverluste in Kauf genommen werden, eine Datenverbindung zwischen der vorhandenen Eigenerzeugungsanlagen und der Umschalteinheit ist des Weiteren erforderlich. Dadurch ist eine Erweiterung einer vorhandenen Eigenerzeugungseinheit zu einer Anlage mit gesicherter Stromversorgung erschwert, da dann, wenn die Online USV-Anlage defekt ist, die elektrischen Verbraucher, die über diese Anlage versorgt wurden, über eine zusätzliche Umschalteinrichtung mit dem öffentlichen Energieversorgungsnetz verbunden werden müssen. Elektrische Verbraucher mit gesicherter Versorgung sind genau einem Batteriewechselrichter zugeordnet. Dadurch können sehr große Verbraucher nicht mehreren Wechselrichtern zugeordnet werden. Eine Vielzahl von Verbrauchern muss außerdem immer auf bestimmte Wechselrichter aufgeteilt werden.

Darüber hinaus sind die Eigenerzeugungsanlage, elektrische Verbraucher und Ersatzstromversorgung nicht AC-seitig parallel geschaltet, so dass also eine gesicherte Stromversorgung und Parallelbetrieb zum öffentlichen Energieversorgungsnetz nicht möglich ist.

In der US 6 949 843 B2 ist eine Kopplungseinrichtung zur Kopplung eines Energiespeichers und einer Eigenerzeugungsanlage auf einer DC Seite gezeigt und beschrieben. Die beschriebene Anlage ist eine sogenannte Offline-USV-Anlage.

Bei dieser Einrichtung ist nur ein DC/AC-Konverter für die Einspeisung von elektrischer Energie in das öffentliche Energieversorgungsnetz oder für die Versorgung spezieller elektrischer Verbraucher für den Fall eines Netzausfalls vorgesehen.

Weil die Energiequelle, beispielsweise ein Photovoltaikgenerator, in den hier beschriebenen Fällen eine stark schwankende Spannung aufweist, muss ein bidirektionaler Anpasssteller zwischen der Energiequelle und der Batterie vorgesehen sein.

Dem DC/AC Konverter ist eine sogenannte "Transfer Unit" nachgeschaltet. Im Falle eines Netzausfalls trennt diese Einheit den DC/AC Konverter und die speziellen Verbraucher vom Netz. Danach werden sie mit dem Ausgang des DC/AC Konverters verbunden und von diesem versorgt. Während der Umschaltzeit werden die Verbraucher nicht versorgt.

Alternativ zu der Versorgung aus dem Photovoltaik-Generator kann jedoch die Batterie über ein separates Batterieladegerät aus dem öffentlichen Energieversorgungsnetz geladen werden.

Bei dieser Offline Lösung ist, außer dass elektrische Verbraucher nicht ohne Unterbrechung versorgt werden können, eine modulare Erweiterbarkeit nicht gegeben, da eine bestimmte Anzahl von speziellen Verbrauchern einem bestimmten DC/AC Konverter zugeordnet sind. Dadurch können Verbraucher großer Leistung nicht mehreren DC/AC Konvertern zugeordnet werden. Eine Vielzahl von Verbrauchern muss daher immer auf bestimmte DC/AC Konverter aufgeteilt werden. Ein weiterer Nachteil ist, dass die gesamte Anlage schon bei der Erstinstallation der Eigenerzeugungsanlage für einen Betrieb als gesicherte Stromversorgung ausgelegt sein muss, da die Batterie auf der DC-Seite angebunden sein muss und der DC/AC Konverter von vorne herein auch für den Inselbetrieb geeignet sein muss. Zudem können vorhandene Eigenerzeugungsanlagen ohne DC Zwischenkreis, insbesondere Windgeneratoren mit Asynchrongenerator, nicht eingebunden werden.

Eine zusätzliche Einrichtung, nämlich ein bidirektionaler Anpasssteller, ist erforderlich und verteuert die Anlage.

Wenn die Batterie auch aus dem öffentlichen Energieversorgungsnetz geladen werden soll, ist darüber hinaus ein zusätzliches Batterieversorgungsgerät erforderlich.

Bekannt sind auch Lösungen mit einer Kopplung von einem Batteriewechselrichter und einer Eigenerzeugungsanlage auf der AC Seite.

Im Katalog "Smarte Energiekonzepte", August 2006, der Fa. Studer in Sion (Schweiz) wird auf der Seite 11 ein System beschrieben, bei dem ein Batteriewechselrichter mit einer Eigenerzeugungsanlage kombiniert wird, wobei die Netzüberwachung der Eigenerzeugungsanlage im Netzbetrieb und im Inselbetrieb in Funktion bleibt.

Ein solches System wird derart geregelt, dass im Ladebetrieb eine Stromregelung im Inselwechselrichter wirksam ist. Wenn ein Netzausfall stattfindet, muss die Regelung auf eine Spannungsregelung umgeschaltet werden. Dadurch entsteht bei allen Netzkonfigurationen eine Unterbrechung bei der Versorgung der Verbraucher.

Ein Nachteil dieses Systems besteht darin, dass die Eigenerzeugungsanlage im Inselbetrieb häufig abschaltet, weil die Netzparameter sich beim Zu- und Abschalten von Verbrauchern im Inselbetrieb stärker ändern als im Netzbetrieb. Dadurch ist die Stabilität des gesamten Systems eingeschränkt. Weiter wird eine modulare Ervveiterbarkeit erschwert. Bei einer Kopplung von Batteriewechselrichter und Eigenerzeugungsanlage auf der AC Seite entsprechend dem Stand der Technik, kann eine unterbrechungsfreie Versorgung der Verbraucher nicht erreicht werden, weil eine Reglerumschaltung notwendig ist.

Aus der US, 304,006 B1 ist eine Ersatzstromanlage, die als USV-Anlage ausgeführt ist, mit einer Eigenerzeugungsanlage und mit einer Netzüberwachungseinrichtung bekannt, die als USV bzw. als UPS (Uninterruptible Power Supply) bzw. Backupsystem ausgeführt ist. Diese umfasst eine Netzüberwachungseinrichtung. Hierbei kann ein Solargenerator über einen Umschalter an eine Last angeschlossen werden. Der Solargenerator ist mit einem Inselwechselrichter verbunden, der die DC-Spannung des Solargenerators in eine dem Netz äquivalente AC-Spannung wandelt. An dem Umschalter ist ein öffentliches Energiestromnetz angeschlossen. Durch den Umschalter kann jedoch nur wahlweise entweder nur das Netz oder nur der Solargenerator mit dem Verbraucher verbunden werden. Alternativ kann auch anstatt des Solargenerators eine Batterie an den Inselwechselrichter angeschlossen werden. Durch diese Schaltungstopologie ist es nicht möglich gleichzeitig den Solargenerator und die Batterie an den Verbraucher anzuschließen. Wird der Solargenerator zur Notstromversorgung eingesetzt, dann muss nachts ein zusätzlicher Hilfsgenerator eingesetzt werden, der mit dem Inselwechselrichter verbunden ist. Bei dieser Lösung muss der Inselwechselrichter für die höchst mögliche Leistung dimensioniert werden. Dies ist teuer, da eine Überdimensionierung des Inselwechselrichters erforderlich ist. Wenn die Leistungsgrenze des Inselwechselrichters überschritten wird muss sogar ein neuer, leistungsstärkerer Wechselrichter eingesetzt werden. Der AC-Generator kann hier nämlich nicht direkt die Last mit versorgen.

In der US 2002/0143438 A1 ist eine Schaltungstopologie für Brennstoffzellen, die an ein öffentliches Netz angeschlossen sind, gezeigt und beschrieben. Die Topologie umfasst drei Anschlussknoten, und zwar einen ersten Knoten, an dem die Brennstoffzellen mit einem DC/AC-Wandler, ein Schalter zur Verbindung des Netzes sowie ein weiterer Schalter zur Verbindung einer Last angeschlossen sind, einen zweiten Knoten an dem die Last, ein zusätzlicher Schalter und der Schalter für die Last verbunden sind und einen dritten Knoten, der das Netz mit dem zusätzlichen Schalter und dem ersten Schalter verbindet. Weiterhin ist ein Lastmanagement vorgesehen. Diese dient dazu bei Zeiten von Spitzenlast, wie zu bestimmten Jahres- Tageszeiten, die Brennstoffzellen an das Netz zu schalten, so dass ein Netzzusammenbruch verhindert wird.
Aus der WO 03/077398 A2 ist ein Inselnetz bekannt, das regenerative Energieerzeuger und zwar mehrere Windenergieanlagen und mehrere Solargeneratoren umfasst. Jeder Solargenerator ist an einem DC/DC-Wandler angeschlossen. Die DC/DC-Wandler werden busartig mit einem DC/AC-Wandler verbunden. Weiterhin werden Zwischenspeicher bzw. Batterien eingesetzt, die jeweils einen DC/DC-Wandler umfassen. Diese werden ebenfalls busartig mit dem DC/AC-Wandler verbunden.

Der hier beschriebenen Erfindung liegt die Aufgabe zugrunde, eine gegenüber dem Stand der Technik verbesserte Lösung zur Erweiterung von netzparallelen Eigenerzeugungsanlagen auf der Netzseite zu finden, bei der eine Eigenerzeugungsanlage derart ergänzt wird, dass sie einerseits zusätzlich als Ersatzstromversorgung nutzbar und andererseits modular erweiterbar ist, wobei eine unterbrechungsfreie Stromversorgung der Verbraucher sowie eine Netztrennung bei Netzausfall möglich ist.

Die Aufgabe wird durch eine Ersatzstromanlage gelöst, die als USV-Anlage ausgeführt ist, mit einer Eigenerzeugungsanlage und mit einer Netzüberwachungseinrichtung, wobei die Anlage einen ersten Anschlussknoten umfasst, der mit der Eigenerzeugungsanlage verbunden ist, der mit mindestens einer ersten Schalter umfassenden selbsttätigen Freischaltstelle verbunden ist, wobei der erste Schalter zwischen der Eigenerzeugungsanlage und einem öffentlichen Energiestromnetz angeordnet ist, und der mit einem zweiten Schalter verbunden ist, der mit einem oder mehreren Verbrauchern verbunden ist, die einen zweiten Anschlussknoten umfasst, der mit dem zweiten Schalter verbunden ist, der mit dem Verbraucher verbunden ist, der mit einem dritten Schalter verbunden ist, der zwischen dem öffentlichen Energiestromnetz und dem Verbraucher angeordnet ist, und der mit einem vierten Schalter verbunden ist, an dem ein Inselwechselrichter mit einem Speicher angeschlossen ist, und die einen dritten Anschlussknoten umfasst, der den ersten Schalter und den dritten Schalter mit dem öffentlichen Energiestromnetz verbindet, wobei die Eigenerzeugungsanlage eine parallel zum öffentlichen Energiestromnetz zuschaltbare AC-Spannung liefert, und die Netzüberwachungseinrichtung zum Öffnen der ersten Schalters bei Netzausfall des öffentlichen Energiestromnetzes vorgesehen ist.

Durch die Erfindung wird eine Lösung zur Erweiterung von netzparallelen Eigenerzeugungsanlagen zur Ersatzstromversorgung geschaffen.

Durch die Erfindung wird zudem eine Online-USV-Anlage geschaffen, wobei es günstig ist, wenn die Schaltzeit jedes Schalters höchstens 50 ms, insbesondere höchstens 30 ms beträgt, wobei jeder Schalter als Schütz ausgeführt sein kann. Dadurch ist eine sichere unterbrechungsfreie Stromversorgung gegeben.

Die Erfindung kann zusätzlich zu einer bestehenden Eigenerzeugungsanlage installiert werden, ohne dass die vorhandene Einspeiseeinrichtung (z.B. Solarvvechselrichter) ersetzt werden muss.

Die Erfindung erlaubt außerdem den Parallelbetrieb einer z.B. batteriegestützten Ersatzstromversorgung zum öffentlichen Energieversorgungsnetz (andere Energiespeicher wie Schwungradspeicher, UC Kondensatoren, EEStore, Brennstoffzelle usw. sind auch möglich) und verwirklicht folgende Vorteile:
Ein Energiespeicher einer Ersatzstromanlage kann ständig nachgeladen werden, so dass bei Netzausfällen genügend Energie zur Verfügung steht. Dabei kann der Energiefluss und die Spannung des Energiespeichers so beeinflusst werden, dass eine lange Lebensdauer des Speichers gewährleistet wird.

Für die Eigenerzeugungsanlagen wird eine "selbsttätige Freischaltstelle" (früher ENS) zur Verfügung gestellt, damit eine interne selbsttätige Freischaltstelle der Eigenerzeugungsanlage außer Betrieb genommen werden kann. Somit kann die Eigenerzeugungsanlage vorteilhaft auch im Inselbetrieb weiter genutzt werden.

Im Falle eines Ausfalls des öffentlichen Versorgungsnetzes können die Verbraucher in der Regel ohne Unterbrechung mit Energie versorgt werden. Bei Unterbrechung zum Energieversorgungsnetz wird dann ein Inselnetz gebildet, solange bis das Energieversorgungsnetz wieder funktionstüchtig ist. Dann können die Verbraucher wieder aus dem öffentlichen Energieversorgungsnetz versorgt werden.

Vor dem Wiederzuschalten kann das Inselnetz in Spannung und Frequenz mit dem öffentlichen Energieversorgungsnetz synchronisiert werden.

Im Falle von Kurzschlüssen im öffentlichen Energieversorgungsnetz kann der Spannungseinbruch an den Verbrauchern, die von der Ersatzstromversorgung versorgt werden, nicht länger als 30 ms andauern.

Aller Sicherheitsanforderungen bei der Einspeisung entsprechend den gültigen Regeln der Technik werden erfüllt.

Es ist außerdem möglich, den Energiebezug aus dem öffentlichen Energieversorgungsnetz und die Einspeisung der Eigenerzeugungsanlage über getrennte Zähler abzurechnen.

In einer vorteilhaften Weiterbildung der Erfindung ist vorgesehen, dass jeder Schalter in einer Zusatzeinrichtung so integriert ist, dass jede Komponente in einer geeigneten Box oder in einem oder mehreren Schaltschänken angeordnet ist und die Zusatzeinrichtung zwischen dem öffentlichen Energiestromnetz und der Eigenerzeugungsanlage geschaltet ist. Der Inselwechselrichter sowie der Energiespeicher können Bestandteil der Zusatzeinrichtung sein.

In einer weiteren vorteilhaften Weiterbildung der erfindungsgemäßen Anlage ist vorgesehen, dass eine Inselnetzerkennungseinrichtung vorhanden ist, die derart ausgeführt ist, dass sie die Kupplung der Eigenerzeugungsanlage mit dem Energiestromnetz steuert, so dass bei Ausfall des Energiestromnetzes die Zusatzeinrichtung vollständig vom Energiestromnetz getrennt werden kann. Hierdurch kann der Energiebedarf von elektrischen Verbrauchern bei geringer Energielieferung durch die Eigenerzeugungsanlage gedeckt werden und zwar durch den Energiespeicher, zum Beispiel eine Batterie, die am Inselwechselrichter angeschlossen ist. Dies ist bei Einsatz von Photovoltaikgeneratoren in der Eigenerzeugungsanlage wichtig, da diese Nachts keine Energie liefern oder bei geringer Sonnenstrahlung zu wenig Energie liefern.

Ein optimale Anpassung an einen steigenden Strombedarf ist gegeben, wenn mehrere Eigenerzeugungsanlagen parallel angeschlossen sind. Da die Zusatzeinrichtung zwischen dem öffentlichen Energiestromnetz und der Eigenerzeugungsanlage einen Schalter umfasst, der als Schütz ausgeführt sein kann, und der Schalter auch relativ kostengünstig für hohe Stromstärken ausgelegt sein kann ist eine modulare Erweiterung möglich. Es können mehrere Inselwechselrichter parallel geschaltet werden, wenn die Verbrauchergröße dies erfordert.

Vorteilhaft ist weiterhin, wenn die Zusatzeinrichtung eine selbsttätige Freischaltstelle enthält, wodurch die Netzüberwachung der Eigenerzeugungsanlage so eingestellt werden kann, dass sie sowohl im Netzparallelbetrieb als auch im Inselbetrieb betrieben werden kann, was bedeutet, dass die Netzüberwachung von der Zuatzeinrichtung mit den Inselwechselrichtern übernommen wird.

Weiterhin weist die Zusatzeinrichtung eine selbsttätige Freischaltstelle, einen Transferschütz, einen Schütz, eine Netzspannungsmessung und eine Netzstrommessung auf, wodurch die Einrichtung autark betrieben werden kann.

Bei Einsatz als mobile Anlage ist vorteilhaft vorgesehen, dass der Transferschütz ein zweipoliges Schütz ist, wobei der eine Pol so ausgebildet ist, dass bei Wechsel vom Netzparallelbetrieb zum Inselbetrieb der Pol des Schützes, der mit dem Neutralleiter des Verknüpfungspunktes verbunden ist, vom Neutralleiter des Netzes auf PE umgeschaltet werden kann.

Weiterhin ist nach einem vorteilhaften Merkmal vorgesehen, dass das Transferschütz zwischen Energieversorgungsnetz und Verbraucher eingeschaltet wird, sobald Spannung im Energieversorgungsnetz vorhanden ist und der oder die Inselwechselrichter im Ladebetrieb arbeiten oder nicht arbeitsfähig sind. Dies soll die Stromversorgung sichern, wenn der Inselwechselrichter nicht funktionsfähig ist.

Gegenstand der Erfindung ist ebenfalls ein Verfahren zum Betrieb einer Zusatzeinrichtung, wobei die Energieversorgungsanlage datentechnisch mit der Zusatzeinrichtung verbunden ist und durch Datenkommunikation derart beeinflusst ist, dass eine Umschaltung des Betriebsmodus vom Inselbetrieb zum Netzbetrieb möglich ist, wobei die Umschaltung des Betriebsmodus so gesteuert ist, dass bei fehlerhafter Datenverbindung die Energieversorgungsanlage in den Modus für Netzparallelbetrieb übergeht oder in diesem verbleibt.

Weitere vorteilhafte Ausgestaltungen der Erfindung sind in den Unteransprüchen gekennzeichnet.

Anhand der Zeichnungen wird die Erfindung nachstehend beispielhaft näher erläutert.

Hierzu zeigen:

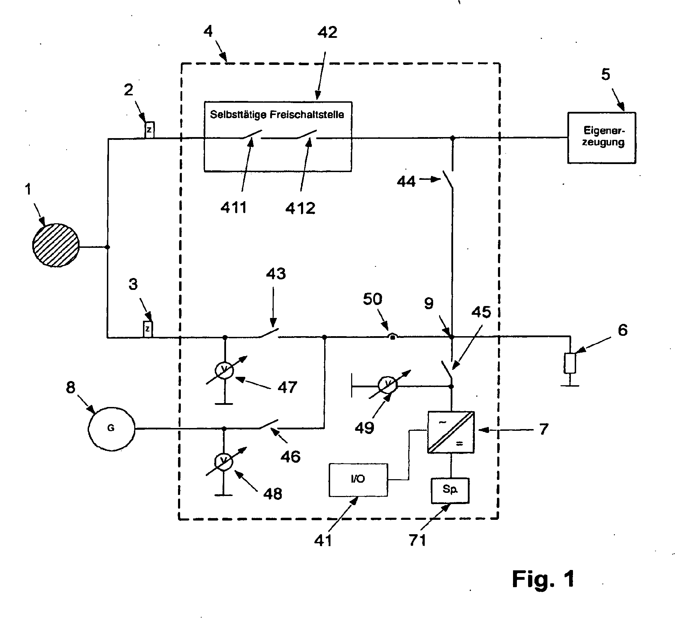

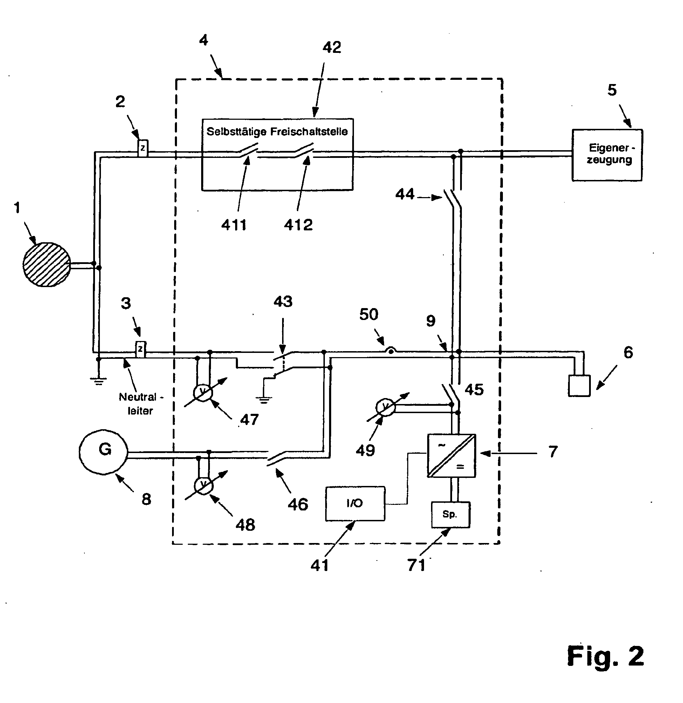

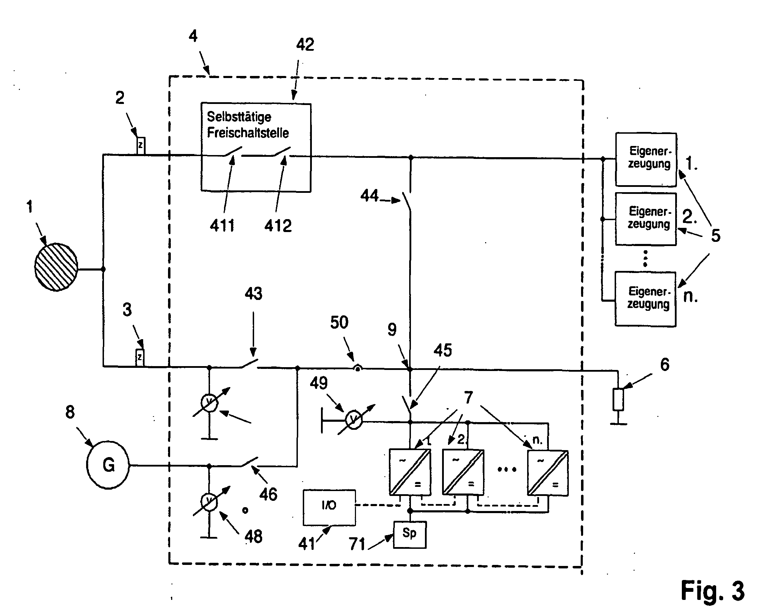

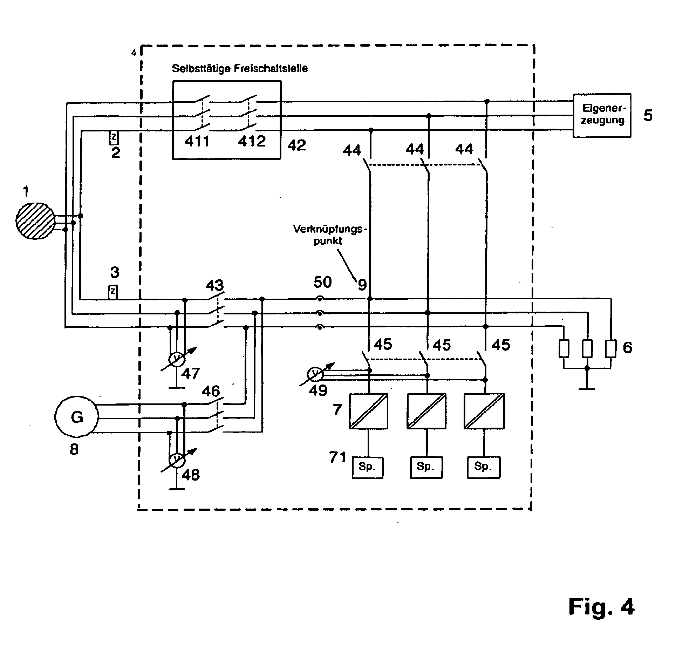

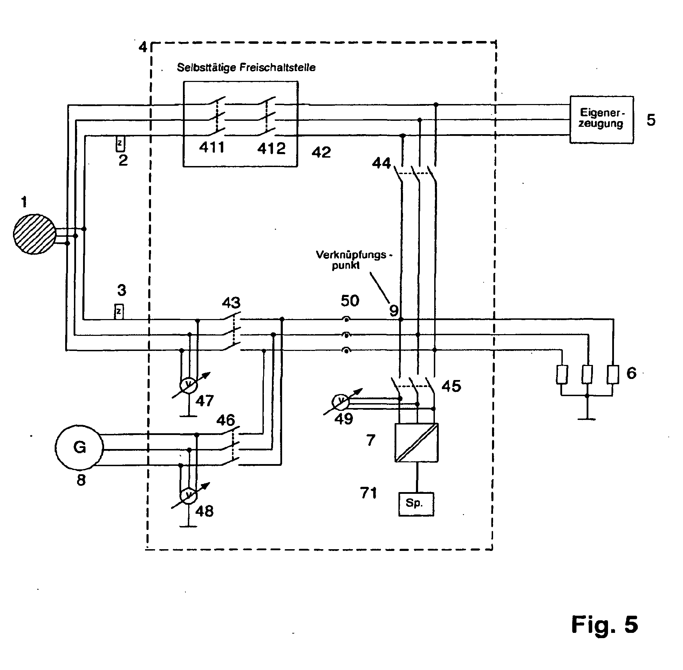

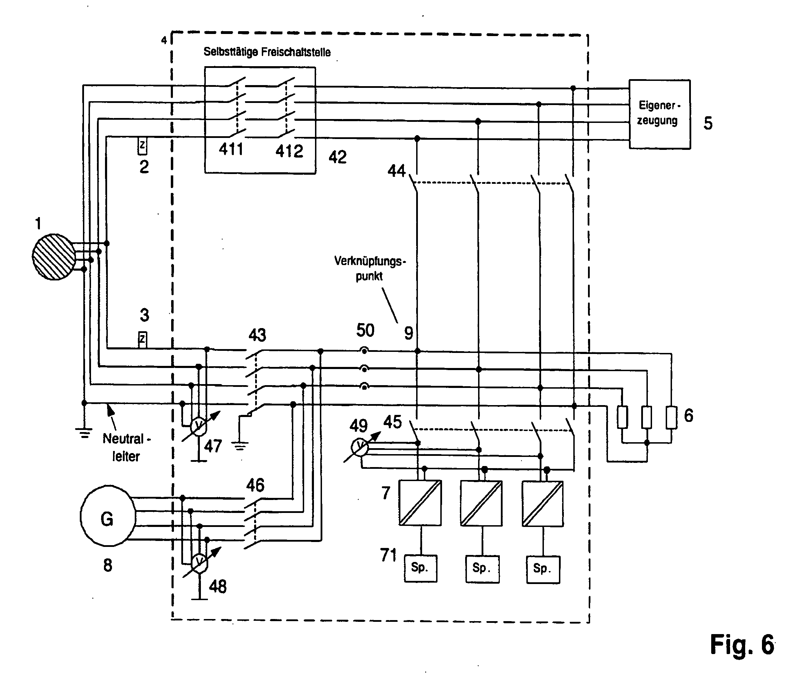

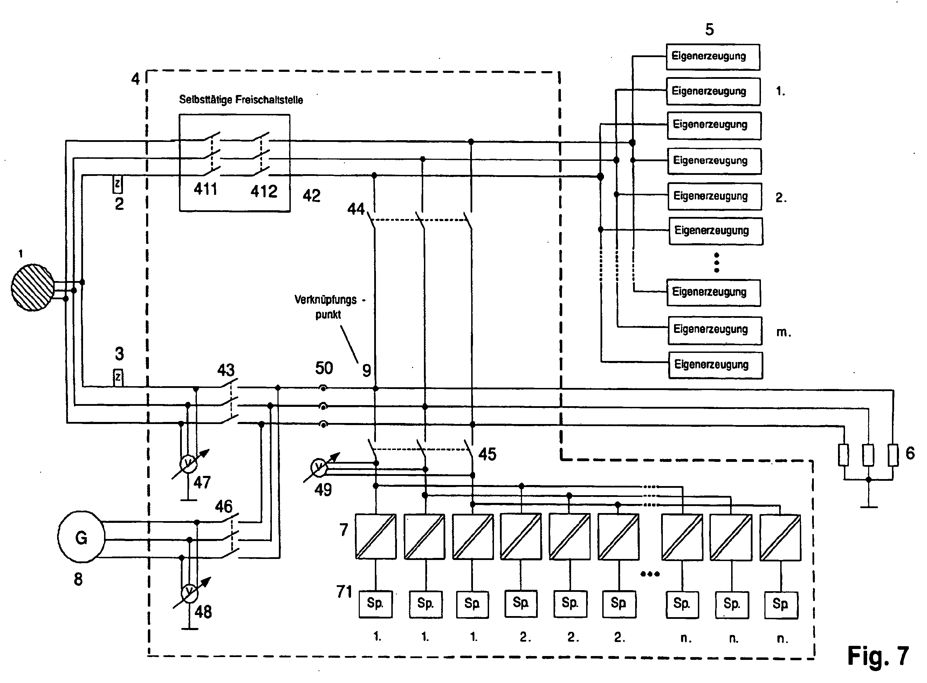

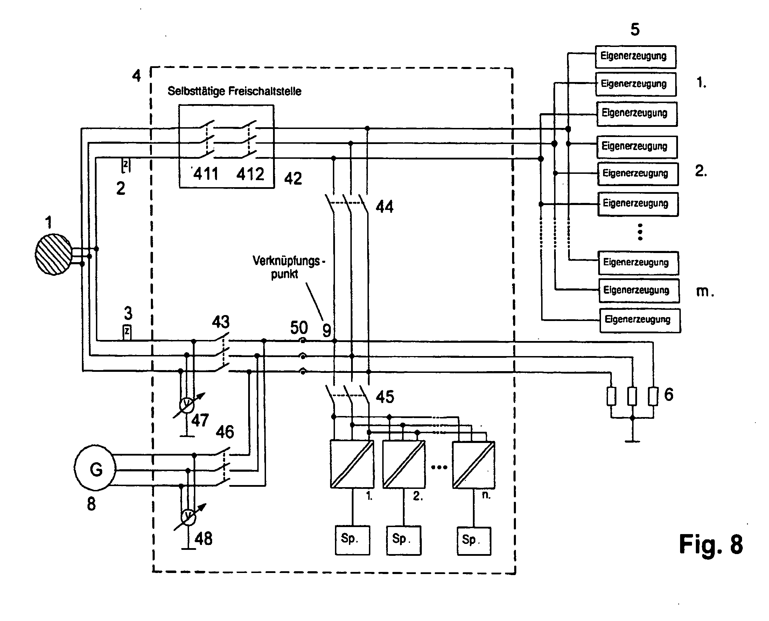

- Fig. 1-8: acht unterschiedliche Ausführungsbeispiel der Zusatzeinrichtung.

In den Figuren sind gleiche Teile mit denselben Bezugszeichen versehen.

Fig.1 zeigt eine Ausführungsform einer erfindungsgemäßen Ersatzstromanlage bzw. Zusatzeinrichtung 4. Diese umfasst Anschlüsse für einen ersten Zähler 2, der als insbesondere als Einspeisezähler ausgeführt ist und einen zweiten Zähler 3, der als insbesondere als Bezugszähler ausgeführt ist.

An einem öffentlichen Energieversorgungsnetz 1 ist durch den Einspeisezähler 2 und den Bezugszähler 3 die Zusatzeinrichtung 4 angeschlossen.

An der Zusatzeinrichtung 4 mit dem Inselwechselrichter 7 sind ein oder mehrere Eigenerzeugungsanlage 5 (z.B. Solargenerator mit Solarwechselrichter), die Verbraucher 6 und gegebenenfalls auch ein Generator 8 angeschlossen. Der Inselwechselrichter kann aus einem oder mehreren parallel geschalteten Inselwechselrichtern bestehen. Die eventuell in der Eigenerzeugungsanlage vorhandene Netzüberwachung (ENS) wird stillgesetzt, sobald der Anschluss der Eigenerzeugungsanlage 5 an die Zusatzeinrichtung 4 erfolgt ist.

Der Inselwechselrichter 7 ist auf seiner DC Seite mit einem Energiespeicher, z. B. einer Batterie 71, verbunden.
Der Inselwechselrichter 7 kann eine interne galvanische Trennung zwischen AC- und DC-Seite aufweisen. Diese Trennung kann über einen Transformator, der mit Netzfrequenz betrieben wird, oder über einen oder mehrere Hochfrequenz-Transformatoren realisiert sein.

Der Inselwechselrichter 7 ist vorteilhaft als H-Brücke aus Halbleiterschaltern ausgebildet. Diese Halbleiterschalter können aus MOS-Transistoren, IGBT-Transistoren oder GTO-Thyristoren bestehen.

Der Inselwechselrichter 7 ist erfindungsgemäß derart ausgebildet, dass im Falle eines Kurzschlusses in Verbraucherstromkreisen während des Inselbetriebs vorhandene Überstromschutzorgane der Verbraucherstromkreise ausgelöst werden.

Das Schütz 45 wird derart angesteuert, dass bei einem Kurzschluss in einem Verbraucherstromkreis und damit verbundenem Zusammenbruch der Spannung am Verknüpfungspunkt 9 die Schützkontakte so lange geschlossen bleiben, bis der Kurzschlussstrom des Inselwechselrichters 7 das zugeordnete Überstromschutzorgan des Verbraucherstromkreises auslöst und damit die Spannung im Verknüpfungspunkt 9 wieder hergestellt ist.

Die Zusatzeinrichtung 4 enthält eine Schnittstelleneinheit 41. Diese Einheit dient zur Verknüpfung des oder der Inselwechselrichters 7 mit den Sensoren und Aktoren in der Zusatzeinrichtung 4. Als Verbindung wird dabei ein geeigneter Datenbus (z.B. CAN Bus) genutzt. Die eine oder mehreren Eigenerzeugungsanlagen sind über die selbsttätige Trennstelle 42 mit dem Einspeisezähler 2 verbunden. Diese Trennstelle enthält mindestens ein Schütz 411; sie kann aber in Reihe zu diesem Schütz ein weiteres Schütz 412 aufweisen. Die Schütze 411 und 412 können einpolig oder allpolig ausgeführt sein. Die Verbraucher 6 sind über das Transferschütz 43 mit dem Netz 1 verbunden. Das Schütz 44 verbindet die Eigenerzeugungsanlage 5 über den Verknüpfungspunkt 9 mit den Verbrauchern 6, wenn das Transferschütz 43 geöffnet wird und die Anlage im Inselbetrieb läuft. Das Schütz 45 verbindet den Inselwechselrichter 7 über den Verknüpfungspunkt 9 mit den Verbrauchern 6. Das Schütz 46 verbindet einen Generator 8 über den Verknüpfungspunkt 9 mit den Verbrauchern 6. Diese Schütze können jeweils einpolig oder allpolig ausgeführt sein.

Die Zusatzeinrichtung 4 enthält mindestens folgende Messwerterfassungen: Netzspannungsmessung 47, AC Spannungsmessung Inselwechselrichter 49, AC-Strommessung 50. Zusätzlich kann eine Generatorspannungsmessung 48 vorhanden sein.

Folgende Betriebszustände sind möglich:

Betrieb am öffentlichen Energieversorgungsnetz:

Die Schütze 411, 412, 43 und 45 sind geschlossen, die Schütze 44 und 46 sind geöffnet. Die Verbraucher 6 werden aus dem Netz 1 über den Bezugszähler 3 mit Energie versorgt. Die Eigenerzeugungsanlagen 5 speisen über den Einspeisezähler 2 Energie ins öffentliche Netz 1 ein. Der Inselwechselrichter 7 lädt den Energiespeicher 71 auf. Dabei ist bei geladenem Energiespeicher in der Regel nur eine Erhaltungsladung mit geringem Energieaufwand erforderlich. Mit Hilfe der Messwerte für Netzspannung und Netzstrom und einem geeigneten Anti-Islanding Verfahren überwacht der Inselwechselrichter 7 ständig die Netzparameter des Versorgungsnetzes und kann so sicher erkennen, ob eine Inselnetzbildung vorliegt oder nicht. Der Inselwechselrichter 7 arbeitet spannungsgeregelt. Die interne Brückenspannung im Inselwechselrichter 7 wird dabei derart geregelt, dass sie in Betrag und Phase in Bezug auf die Spannung am Verknüpfungspunkt so eingestellt wird, dass sich die Spannung am Verknüpfungspunkt wie gewünscht ergibt und ein vorgegebener Batterieladestrom eingestellt wird.

Falls ein Defekt oder ein vorübergehender Fehlerzustand im Inselwechselrichter auftritt, kann dieser über das Schütz 45 vom Verknüpfungspunkt 9 getrennt werden. Ist der Fehlerzustand beseitigt, kann er sich mit Hilfe der Spannungsmessungen 47 und 49 wieder auf die Spannung am Verknüpfungspunkt 9 synchronisieren und den Ladebetrieb des Energiespeichers 71 wieder aufnehmen.

### Übergangszustand:

Wenn das Netz 1 weggeschaltet wird, ein Kurzschluss im Nahbereich vorliegt, oder die Spannungsversorgung im öffentlichen Netz zusammenbricht, wird dies vom Inselwechselrichter 7 erkannt. Der Inselwechselrichter versucht nun über seine Spannungsregelung die Spannung am Verknüpfungspunkt 9 stabil zu halten. Die Schütze 411, 412 und 43 werden geöffnet. Wenn durch die Bedingungen während des Übergangszustandes der Strom aus dem Inselwechselrichter 7 ein bestimmtes Maximum überschreitet, so begrenzt der Inselwechselrichter 7 diesen Strom auf diesen Maximalwert, damit die internen Bauelemente des Inselwechselrichters nicht überlastet werden. Die Spannung am Verknüpfungspunkt 9 sinkt dann entsprechend ab. Sobald die oben genannten Schütze geöffnet sind, fließt der Strom nur noch in die Verbraucher 6. Die Spannung am Verknüpfungspunkt 9 erreicht wieder ihren Nominalwert.

### Inselbetrieb:

Im Inselbetrieb wir das Schütz 44 geschlossen, so dass sich die Eigenerzeugungsanlage selbsttätig auf das Inselnetz am Verknüpfungspunkt 9 synchronisieren kann. Nun kann das entstanden Inselnetz solange weiter betrieben werden, wie die Eigenerzeugungsanlage im Mittel genug Energie bereitstellt. Schwankungen in Erzeugung und Verbrauch werden durch den Inselwechselrichter 7 und seinen Energiespeicher 71 ausgeglichen.

Zusätzlich kann ein vorhandener Generator 8 (z.B. ein Dieselgenerator) über ein Schütz 46 zugeschaltet werden. Hierzu wird zunächst der Generator angelassen, anschließend synchronisiert der Inselwechselrichter mit Hilfe der Generatorspannungsmessung 48 und der Spannungsmessung 49 die Spannung im Verknüpfungspunkt 9 auf die Ausgangsspannung des Generators 8. Nach erfolgter Synchronisation wird das Generatorschütz 46 geschlossen.

### Wiederkehr des Netzes:

Durch die Spannungsmessung 47 wird eine Wiederkehr der Spannung des öffentlichen Energieversorgungsnetzes 1 erkannt. Nach diesem Erkennen, wird zuerst das Schütz 44 geöffnet. Die Eigenerzeugungsanlage schaltet daraufhin ab. Danach wird die Spannung am Verknüpfungspunkt 9 mit der Spannung im Netz 1 synchronisiert und das Transferschütz 43 geschlossen. Als letztes werden die Schütze 411 und 412 geschlossen, so dass die Eigenerzeugungsanlage 5 wieder über den Einspeisezähler 2 am Netz in Betrieb gehen kann. Damit werden die Verbraucher 6 aus dem Netz versorgt und die Eigenerzeugungsanlage 5 speist in das Netz 1 ein.

Das Transferschütz 43 kann als Öffner ausgeführt werden oder aus Halbleiterschaltern bestehen. Es kann so angesteuert werden, dass es im Falle, dass die Zusatzeinrichtung defekt ist, immer geschlossen ist, wenn Netzspannung anliegt. Dadurch kann sichergestellt werden, dass die Verbraucher nicht vom Netz getrennt werden, wenn ein Defekt in der Zusatzeinrichtung vorliegt.

Alle Komponenten der Zusatzeinrichtung 4 können in einer geeigneten Box, in einem oder mehreren Schaltschränken in der Eigenerzeugungsanlage 5 oder in dem Inselwechselrichter 7 angeordnet sein. Der Inselwechselrichter 7 sowie der Energiespeicher 71 sind Bestandteil der Zusatzeinrichtung 4.

Im Inselbetrieb können die Verbraucher 6 vollständig von der Eigenerzeugungsanlage 5 versorgt werden, solange die Energieerzeugung größer oder gleich dem Verbrauch ist. Mit dem Energiespeicher braucht nur die Differenzenergie zwischen Erzeugung und Verbrauch ausgetauscht werden. Dadurch steigt der Wirkungsgrad des Gesamtsystems als Vorteil der AC Kopplung.

Bei der Eigenerzeugungsanlage handelt es sich bevorzugt um eine PV-Anlage mit einem zugeordneten PV-Wechselrichter. Weiterhin kann es sich um eine drehzahlvariable Windenergieanlage mit einem PM-Generator (permanenter Synchrongenerator) handeln.

Fig.2 zeigt die Ausbildung des Systems, wobei das Transferschütz 43 so ausgebildet ist, dass beim Wechsel vom Netzparallelbetrieb zum Inselbetrieb der Pol des Schützes, der mit dem Neutralleiter des Verknüpfungspunktes 9 verbunden ist vom Neutraleiter des Netzes auf PE umgeschaltet werden.

Fig. 3 zeigt die Ausbildung des Systems mit mehreren (n) Inselwechselrichtern und mehreren (m) Eigenerzeugungsanlagen an einer Phase. Die Inselwechselrichter können dabei untereinander und mit der Schnittstelleneinheit 41 über eine geeignete Datenbusverbindung verknüpft sein.

Fig. 4 zeigt die Ausbildung des Systems, bei einer dreiphasigen Verbindung mit dem öffentlichen Energieversorgungsnetz und einem Inselwechselrichter pro Phase.

Fig. 5 zeigt die Ausbildung des Systems, bei einer dreiphasigen Verbindung mit dem öffentlichen Energieversorgungsnetz und einem dreiphasigen Inselwechselrichter.

Fig. 6 zeigt die Ausbildung des Systems, wobei das dreiphasige Transferschütz 43 so ausgebildet ist, dass beim Wechsel vom Netzparallelbetrieb zum Inselbetrieb, der Pol des Schützes, der mit dem Neutralleiter des Verknüpfungspunktes 9 verbunden ist, vom Neutralleiter des Netzes auf PE umgeschaltet werden kann. Die Umschaltung kann auch durch mehrere Schütze realisiert sein.

Fig. 7 zeigt die Ausbildung des Systems bei einer dreiphasigen Verbindung mit dem öffentlichen Energieversorgungsnetz und mehr als einem (n) Inselwechselrichtern pro Phase. An jeder Phase sind 0 bis m

Eigenerzeugungsanlagen angeschlossen. Es können auch 0 bis m dreiphasige Eigenerzeugungsanlagen angeschlossen werden.

Fig. 8 zeigt die Ausbildung des Systems bei einer dreiphasigen Verbindung mit dem öffentlichen Energieversorgungsnetz und mehr als einem (n) dreiphasigen Inselwechselrichter. An jeder Phase sind 0 bis m Eigenerzeugungsanlagen angeschlossen. Es können auch 0 bis m dreiphasige Eigenerzeugungsanlagen angeschlossen werden.

Die Eigenerzeugungsanlagen können mit unterschiedlichen Modi für den Inselbetrieb und den Netzparallelbetrieb ausgeführt sein. Mittels Kommunikation zwischen der Zusatzeinrichtung 4 und der Eigenerzeugungsanlage 5 kann eine Umschaltung zwischen den Modi erfolgen. Dadurch kann eine weiter verbesserte Stabilität im Inselnetzbetrieb erreicht werden. Erfindungsgemäß wird die Umschaltung so gestaltet, dass bei einem Ausfall oder eine Störung der Datenverbindung zwischen der Eigenerzeugungsanlage und der Zusatzeinrichtung die Eigenerzeugungsanlage auf den Betriebsmodus "Netzparallelbetrieb" umschaltet oder in diesem verbleibt.

Durch ein geeignetes Datentransfermedium kann die Zusatzeinrichtung Daten von dem zuständigen Versorgungsnetzbetreiber erhalten. Wenn entsprechende Vereinbarungen mit dem Versorgungsnetzbetreiber bestehen, kann die Zusatzeinrichtung auf Grund dieser Daten Blind-und/oder Wirkleistung mit dem öffentlichen Versorgungsnetzes austauschen, um die Spannung am Verknüpfungspunkt zu stabilisieren. Hierdurch können z. B. durch die Einspeisung der Eigenerzeugungsanlage verursachte Überspannungen oder durch große Verbraucher verursachte Unterspannungen am Verknüpfungspunkt vermieden werden.

Alle Schaltelemente können sowohl als Schütze wie auch als Relais oder leiterplattenbestückte Relais ausgebildet sein.

Die Eigenerzeugungsanlage kann aus einer Windenergieanlage mit einem Synchrongenerator, PM-Generator oder einem Asynchrongenerator und einem Wechselrichter, einer Windenergieanlage mit einem netzgekoppelten Synchron- oder Asynchrongenerator, einer Brennstoffzelle mit einem zugehörigen Wechselrichter bestehen. Weiterhin kann die Eigenerzeugungsanlage ein Wasserkraftwerk mit einem netzgekoppelten Synchron- oder Asynchrongenerator oder eine drehzahlvariable Wasserkraftanlage mit einem PM Generator, einem Synchrongenerator oder einem Asynchrongenerator und einem zugehörigen Netzwechselrichter sein. Ebenso kann die Eigenerzeugungsanlage aus einem Verbrennungsmotor mit einem netzgekoppelten Synchron- oder Asynchrongenerator, einem drehzahlvariablen Verbrennungsmotor mit einem PM Generator, einem Synchrongenerator oder einem Asynchrongenerator und zugehörigen Netzwechselrichter bestehen. Weiterhin kann die Eigenerzeugungsanlage aus einer Brennstoffzelle mit einem zugehörigen Wechselrichter bestehen oder eine anders geartete Eigenerzeugungsanlage sein.

Die in Fig. 1 - 8 gezeigte Zusatzeinrichtung zeichnet sich zusammengefasst dadurch aus:
- dass sie über eine eigene Netzüberwachung und Inselnetzerkennung verfügt und die Eigenerzeugungsanlage 5 derart ertüchtigt, dass sie als Ersatzstromversorgung nutzbar gemacht werden kann,
- dass sie einen oder mehrere Inselwechselrichter 7 und einen oder mehrere Energiespeicher 71 erhält,
- dass der Inselwechselrichter 7 spannungsgeregelt betrieben wird und dadurch bei einem Wegfall des Energieversorgungsnetzes keine Reglerumschaltung erfolgen muss,
- dass die Zusatzeinrichtung 4 eine selbsttätige Schaltstelle 42 enthält und daher die Netzüberwachung der Eigenerzeugungsanlage so eingestellt werden kann, dass sie im Netzparallelbetrieb und im Inselbetrieb gleichermaßen betrieben werden kann (Die Netzüberwachung wird also von der Zusatzeinrichtung 4 mit dem Inselwechselrichter 7 übernommen),
- dass die Ersatzstromversorgung, bestehend aus der Eigenerzeugungsanlage 5 und der Zusatzeinrichtung 4 quasi eine Online USV-Anlage ist, die bei den meisten vorkommenden Netzfehlern die Verbraucher ohne Unterbrechung weiter mit Energie versorgt,
- dass die Eigenerzeugungsanlage 5 die Verbraucher 6 der oder die Inselwechselrichter 7, das Energieversorgungsnetz 1 über den Verknüpfungspunkt 9 auf der AC-Seite verbunden sind,
- dass das Energieversorgungsnetz 1 an diese Ersatzstromversorgung angeschlossen ist, ein öffentliches Energieversorgungsnetz ist, das eine Vielzahl von Verbrauchern versorgt, oder dass es sich um ein Inselnetz mit einem oder wenigen Verbrauchern handelt,
- dass die Zusatzeinrichtung 4 eine selbsttätige Schaltstelle 42, ein Transferschütz 43 und einen Schütz 44 aufweist,
- dass sie eine Netzspannungsmessung 47 und eine Netzstrommessung 50 enthält,
- dass die Zusatzeinrichtung 4 mit netzparallelen Eigenerzeugungsanlagen 5 verbunden ist,
- dass die selbsttätige Schaltstelle 42 zwei Schütze 411 und 412 in Reihe enthält,
- dass die Zusatzeinrichtung 4 zusätzlich eine Schnittstelleneinheit 41 enthält,
- dass die Schnittstelleneinheit 41 zur Verknüpfung des oder der Inselwechselrichter 7 mit den Sensoren und Aktoren in der Zusatzeinrichtung 4 dient, wobei die Verbindung durch einen geeigneten Datenbus (z.B. CAN Bus) ausgeführt sein kann,
- dass die Zusatzeinrichtung 4 zusätzlich ein Generatorschütz 46 und eine Generatorspannungsmessung 48 enthalten kann,
- dass die Zusatzeinrichtung 4 zusätzlich ein Schütz 45 zum Abtrennen des Inselwechselrichters und eine Spannungsmessung 49 am Inselwechselrichter enthält,
- dass die Komponenten der Zusatzeinrichtung 4 in einer geeigneten Box, in einem oder mehreren Schaltschränken in der Eigenerzeugungsanlage 5 oder in dem Inselwechselrichter 7 angeordnet sind,
- dass die Ersatzstromanlage durch einfaches Parallelschalten eines oder mehrer Inselwechselrichter erweiterbar ist,
- dass die mehreren Inselwechselrichter datentechnisch mit einem geeigneten Datenbus verbunden sind,
- dass die Inselwechselrichter 7 und die Eigenerzeugungsanlage 5 mit Halbleiterschaltern aufgebaut sind, beispielsweise MOS-Transistoren, IGBTs, GTOs,
- dass die Inselwechselrichter 7 galvanisch mit dem Verknüpfungspunkt verbunden sind,
- dass der oder die Inselwechselrichter 7 galvanisch nicht mit dem Verknüpfungspunkt 9 verbunden sind und einen Transformator enthalten, der mit Netzfrequenz betrieben wird.
- dass der oder die Inselwechselrichter 7 galvanisch nicht mit dem Verknüpfungspunkt 9 verbunden sind und einen oder mehrere Transformatoren enthalten, die mit einer Frequenz betrieben werden, die höher als die Netzfrequenz ist.
- dass die ein oder mehreren Inselwechselrichter 7 einphasige oder dreiphasige Wechselrichter sind,
- dass die ein oder mehreren Eigenerzeugungsanlagen 5 einphasig oder dreiphasig angeschlossen werden,
- dass der oder die Inselwechselrichter 7 als Vollbrücke ausgestaltet sind,
- dass das Transferschütz 43 ein einpoliges Schütz ist und der Neutralleiter beim Umschalten vom Netzparallelbetrieb zum Inselbetrieb nicht geschaltet wird,
- dass das Transferschütz 43 ein zweipoliges Schütz ist, wobei der eine Pol so ausgebildet ist, dass beim Wechsel vom Netzparallelbetrieb zum Inselbetrieb, der Pol des Schützes, der mit dem Neutralleiter des Verknüpfungspunktes (9) verbunden ist, vom Neutralleiter des Netzes 1 auf PE umgeschaltet werden kann.
- dass das Transferschütz 43 ein dreipoliges Schütz ist und der Neutralleiter beim Umschalten vom Netzparallelbetrieb zum Inselbetrieb nicht geschaltet wird,
- dass das Transferschütz 43 ein vierpoliges Schütz ist, wobei der eine Pol so ausgebildet ist, dass bei beim Wechsel vom Netzparallelbetrieb zum Inselbetrieb, der Pol des Schützes, der mit dem Neutralleiter des Verknüpfungspunkt 9 verbunden ist, vom Neutralleiter des Netzes 1 auf PE umgeschaltet werden kann,
- dass die Schaltelemente 411, 412; 42, 43, 44, 45, 46 als Schütze, als Relais oder als leiterkartenbestückte Relais ausgeführt sein können,
- dass im Inselbetrieb die Verbraucher 6 vollständig von der Eigenerzeugungsanlage 5 versorgt werden können, solange die Energieerzeugung größer oder gleich dem Verbrauch ist,
- dass die Eigenerzeugungsanlage eine PV-Anlage mit einem entsprechenden Wechselrichter, eine dreizahlvariable Windenergieanlage mit einem PM-Generator, einem Synchrongenerator oder einem Asynchrongenerator und einem Wechselrichter, eine Windenergieanlage mit einem netzgekoppelten Synchron- oder Asynchrongenerator, eine Brennstoffzelle mit einem zugehörigen Wechselrichter, ein Wasserkraftwerk mit einem netzgekoppelten Synchron- oder Asynchrongenerator, eine drehzahlvariable Wasserkraftanlage mit einem PM-Generator, einem Synchrongenerator oder einem Asynchrongenerator und einem zugehörigen Netzwechselrichter, ein Verbrennungsmotor mit einem netzgekoppelten Synchron- oder Asynchrongenerator, ein drehzahlvariabler Verbrennungsmotor mit einem PM-Generator, einem Synchrongenerator oder einem Asynchrongenerator und zugehörigen Netzwechselrichter oder eine anders geartete Eigenerzeugungsanlage ist,
- dass es sich bei dem Energiespeicher 71 um eine Batterie, einen Doppelschichtkondensator, um einen EEStore, um eine Brennstoffzelle, um einen Schwungrad, um ein Pumpspeicherkraftwerk oder einen anderen Energiespeicher handelt,
- dass die Zusatzeinrichtung so ausgeführt ist, dass der Energiebezug der Verbraucher und die Energieeinspeisung der Eigenerzeugungsanlage über getrennte Zähler erfolgen können,
- dass die in der Zusatzeinrichtung vorhandene Netzüberwachung und Inselnetzerkennung auf einem passiven Verfahren beruht,
- dass die in der Zusatzeinrichtung vorhandene Netzüberwachung und Inselnetzerkennung auf einem aktiven Verfahren beruht,
- dass die Zusatzeinrichtung auf Anforderung durch den zuständigen Versorgungsnetzbetreiber, Blind- und Wirkleistung mit dem Versorgungsnetz austauschen kann,
- dass die Zusatzeinrichtung zur Verbessung der Spannungsqualität des öffentlichen Energieversorgungsnetzes am Verknüpfungspunkt Blind-und Wirkleistung mit dem Versorgungsnetz austauschen kann,
- dass das Transferschütz 43 als Öffner ausgeführt ist,
- dass das Transferschütz 43 als Halbleiterschalter ausgeführt ist,
- dass im Falle eines Kurzschlusses in einem Verbraucherstromkreis während des Inselbetriebes Überstromschutzorgane der Verbraucherstromkreise durch den oder die Inselwechselrichter 7 ausgelöst werden,
- dass im Falle eines Kurzschlusses in einem Verbraucherstromkreis während des Inselbetriebes mit damit verbundenem Zusammenbrechen der Spannung im Verknüpfungspunkt 9 das Schütz 45 so lange geschlossen bleibt, dass der Inselnetzrichter 7 das Überstromschutzorgan des Verbraucherstromkreises auslösen kann und damit die Spannung im Verknüpfungspunkt 9 wiederkehren kann,
- dass der Inselwechselrichter nach einer vollständigen Aufladung der Batterien in einen Energiesparmodus übergeht, wobei er alles bis auf die Netzüberwachung abschaltet, um Energie zu sparen,
- dass das Transferschütz 43 eingeschaltet wird, sobald Spannung im Energieversorgungsnetz vorhanden ist und die oder der Inselwechselrichter im Ladebetrieb arbeiten oder nicht arbeitsfähig sind,
- dass die Schütze 411, 412; 44 bei Ausfall der Netzüberwachung in der Zusatzeinrichtung 4 abgeschaltet werden,
- dass die Eigenerzeugungsanlage 5 datentechnisch mit der Zusatzeinrichtung 4 verbunden ist und über Datenkommunikation derart beeinflusst werden kann, dass eine Umschaltung des Betriebsmodus vom Inselbetrieb zum Netzparallelbetrieb möglich ist,
- dass die Umschaltung des Betriebsmoduls - Inselbetrieb/Netzparallelbetrieb- der Erzeugungsanlage 5 so gestaltet wird, dass bei einer fehlerhaften Datenverbindung die Eigenerzeugungsanlage in den Modus für den Netzparallelbetrieb übergeht bzw. in diesem verbleibt,
- dass die datentechnische Verbindung mittels drahtgebundener Kommunikation und/oder Funkkommunikation und/oder Powerline-Kommunikation ausgeführt wird,
- dass der Befehl zur Umschaltung zwischen Inselbetrieb und Netzparallelbetrieb der Eigenerzeugungsanlage 5 mittels eines einfachen analogen oder digitalen Signals übertragen wird,
und/oder
- dass der Befehl zur Umschaltung zwischen Inselbetrieb und Netzparallelbetrieb der Eigenerzeugungsanlage 5 über die Leistungsleitungen mittels eines Rundsteuersignals übertragen werden.

Erfindungsgemäß wird also die Ersatzstromanlage parallel zur Eigenerzeugungsanlage, zu den Verbrauchern und zum öffentlichen Versorgungsnetze betrieben, so dass eine modulare Erweiterbarkeit und eine problemlose Ergänzung vorhandener Anlagen möglich ist.

Vorhandene Eigenerzeugungsanlagen können modular zu Ersatzstromversorgungen erweiterbar sein. Die Leistung der Ersatzstromversorgung kann nachträglich auf einfache Weise vergrößert werden.

Eine AC-seitige Parallelschaltung von Eigenerzeugungsanlage, öffentlichem Energieversorgungsnetz, Verbrauchern und Ersatzstromversorgung kann gegeben sein.

Für den Fall, dass die Versorgung durch das öffentliche Energieversorgungsnetz wegfällt, können die Verbraucher unterbrechungsfrei versorgt werden.

Für den Fall, dass ein Kurzschluss im Nahbereich innerhalb des öffentlichen Versorgungsnetzes auftritt, kann die Versorgung der Verbraucher nicht länger als 30 ms unterbrochen werden.

Der zusätzliche Energieverbrauch für die Bereitstellung einer unterbrechungsfreien Stromversorgung kann minimal sein.

Die von der Eigenerzeugungsanlage ins öffentliche Energieversorgungsnetz eingespeiste Energie kann durch die Zusatzeinrichtung nicht gemindert werden.

## Patentansprüche

1. Ersatzstromanlage, die als USV-Anlage ausgeführt ist, mit einer Eigenerzeugungsanlage (5) und mit einer Netzüberwachungseinrichtung
sowie mit einer Schaltungstopologie,
a. die einen ersten Anschlussknoten umfasst,
a.1 der mit der Eigenerzeugunasanlage (5) verbunden ist,
a.2 der mit mindestens einer einen ersten Schalter (411, 412) umfassenden selbsttätigen Freischaltstelle verbunden ist, wobei der erste Schalter (411, 412) zwischen der Eigenerzeugungsanlage (5) und einem öffentlichen Energiestromnetz (1) angeordnet ist, und
a.3 der mit einem zweiten Schalter (44) verbunden ist, der mit einem oder mehreren Verbrauchern (6) verbunden ist,
b. die einen zweiten Anschlussknoten (9) umfasst, H
b.1 der mit dem zweiten Schalter (44) auf dessen Verbrancherseite verbunden ist,
b.2 der mit dem Verbraucher (6) verbunden ist,
b.3 der mit einem dritten Schalter (43) verbunden ist, der zwischen dem öffentlichen Energiestromnetz (1) und dem Verbraucher (6) angeordnet ist, und
b.4 der mit einem vierten Schalter (45) verbunden ist, an dem ein Inselwechselrichter (7) mit einem Speicher (71) angeschlossen ist,
c. und die einen dritten Anschlussknoten umfasst,
c.1 der den ersten Schalter (411, 412) und den dritten Schalter (43) mit dem öffentlichen Energiestromnetz (1) verbindet
d. wobei die Eigenerzeugungsanlage (5) eine parallel zum öffentlichen Energiestromnetz (1) zuschaltbare AC-Spannung liefert, und die Netzüberwachungseinrichtung zum Öffnen des ersten Schalters (411, 412) bei Netzausfall des öffentlichen Energiestromnetzes vorgesehen ist.

2. Ersatzstromanlage nach Anspruch 1,
**dadurch gekennzeichnet,**
**dass** jeder Schalter (411,412, 43, 44, 45) in einer Zusatzeinrichtung (4) so integriert ist, dass jede Komponente in einer geeigneten Box oder in einem oder mehreren Schaltschänken angeordnet ist und die Zusatzeinrichtung (4) zwischen dem öffentlichen Energiestromnetz (1) und der Eigenerzeugungsanlage (5) geschaltet ist.

3. Ersatzstromanlage nach Anspruch 2,
**dadurch gekennzeichnet,**
**dass** eine Inselnetzerkennungseinrichtung vorhanden ist, die derart ausgeführt ist, dass sie die Kupplung der Eigenerzeugungsanlage (5) mit dem Energiestromnetz (1) steuert, so dass bei Ausfall des Energiestromnetzes (1) die Zusatzeinrichtung (4) vollständig vom Energiestromnetz getrennt werden kann.

4. Ersatzstromanlage nach einem der vorhergehenden Ansprüche,
**gekennzeichnet durch**
eine Ausführung derart, dass mehrere Eigenerzeugungsanlagen (5) parallel anschließbar sind.

5. Ersatzstromanlage nach einem der vorhergehenden Ansprüche,
**gekennzeichnet durch**
eine Ausführung derart, dass mehrere Inselwechselrichter (7) parallel anschließbar sind.

6. Ersatzstromanlage nach einem der vorhergehenden Ansprüche,
**gekennzeichnet durch**
zwei Anschlüsse für zwei getrennte Energiezähler (2, 3), wobei ein erster mit der selbsttätigen Freischaltstelle (42) verbundener Zähler (2) als Einspeisezähler (2) vorhanden ist und ein zweiter Zähler (3) vorhanden ist, der mit einem zwischen Energiestromnetz (1) und Verbraucher (6) angeordneten vierten Schalter (43) verbunden ist und als Bezugszähler ausgeführt ist.

7. Ersatzstromanlage) nach einem der vorhergehenden Ansprüche,
**dadurch gekennzeichnet,**
**dass** ein weiterer, insbesondere fünfter Schalter (46) zum Zuschalten eines Zusatzgenerators (8) an den Anschlussknoten (9) vorhanden ist, der unterschiedlich zu einem Generator der Eigenerzeugungsanlage ausgeführt ist, wobei der Generator (8), vorzugsweise ein Verbrennungsmotorgenerator, insbesondere ein Dieselgenerator ist.

8. Ersatzstromanlage) nach einem der vorhergehenden Ansprüche,
**dadurch gekennzeichnet,**
**dass** die Eigenerzeugungsanlage mindestens ein Photovoltaikgenerator mit mindestens einem DC/AC-Wechselrichter umfasst.

9. Ersatzstromanlage nach einem der vorhergehenden Ansprüche,
**dadurch gekennzeichnet,**
**dass** der Inselwechselrichter (7) spannungsgeregelt betrieben wird und dadurch bei einem Wegfall des Energieversorgungsnetzes keine Reglerumschaltung erfolgen muss.

10. Ersatzstromanlage nach einem der vorhergehenden Ansprüche 2 bis 8,
**dadurch gekennzeichnet,**
**dass** die Zusatzeinrichtung (4) die selbsttätige Freischaltstelle (42) enthält und daher die Netzüberwachung der Eigenerzeugungsanlage so eingestellt werden kann, dass sie im Netzparallelbetrieb und im Inselbetrieb gleichermaßen betrieben werden kann.

11. Ersatzstromanlage nach einem der vorhergehenden Ansprüche 2 bis 9,
**dadurch gekennzeichnet,**
**dass** die Zusatzeinrichtung (4) eine selbsttätige Freischaltstelle (42), ein Transferschütz (43), ein Schütz (44), eine Netzspannungsmessung (47) und eine Netzstrommessung (50) enthält.

12. Ersatzstromanlage nach einem der vorhergehenden Ansprüche,
**dadurch gekennzeichnet,**
**dass** das Transferschütz (43) ein zweipoliges Schütz ist, wobei der eine Pol so ausgebildet ist, dass beim Wechsel vom Netzparallelbetrieb zum Inselbetrieb, der Pol des Schützes, der mit dem Neutralleiter des Verknüpfungspunktes (9) verbunden ist, vom Neutralleiter des Energiestrommeters (1) auf PE umschaltbar ist.

13. Ersatzstromanlage nach einem der vorhergehenden Ansprüche,
**dadurch gekennzeichnet,**
**dass** im Inselbetrieb die Verbraucher (6) vollständig von der Eigenerzeugungsanlage (5) versorgt werden können, solange die Energieerzeugung größer oder gleich dem Verbrauch ist.

14. Ersatzstromanlage nach einem der vorhergehenden Ansprüche 2 bis 12,
**dadurch gekennzeichnet,**
**dass** die in der Zusatzeinrichtung (4) vorhandene Netzüberwachung und Inselnetzerkennung auf einem passiven oder aktiven Verfahren beruht.

15. Ersatzstromanlage nach einem der vorhergehenden Ansprüche,
**dadurch gekennzeichnet,**
**dass** im Falle eines Kurzschlusses in einem Verbraucherstromkreis während des Inselbetriebes mit damit verbundenem Zusammenbrechen der Spannung im Verknüpfungspunkt (9) das Schütz (45) so lange geschlossen bleibt, dass der Inselwechselrichter (7) das Überstromschutzorgan des Verbraucherstromkreises auslösen kann und damit die Spannung im Verknüpfungspunkt (9) wiederkehren kann.

16. Ersatzstromanlage nach einem der vorhergehenden Ansprüche,
**dadurch gekennzeichnet,**
**dass** der Inselwechselrichter nach einer vollständigen Aufladung der Batterien in einen Energiesparmodus übergeht, wobei er alles, bis auf die Netzüberwachung abschaltet, um Energie zu sparen.

17. Ersatzstromanlage nach einem der vorhergehenden Ansprüche,
**dadurch gekennzeichnet,**
**dass** das Transferschütz (43) eingeschaltet wird, sobald Spannung im Energieversorgungsnetz vorhanden ist und die oder der Inselwechselrichter im Ladebetrieb arbeiten oder nicht arbeitsfähig sind.

18. Verfahren zum Betrieb einer Anlage nach einem der vorhergehenden Ansprüche,
**dadurch gekennzeichnet,**
**dass** die Eigenerzeugungsanlage (5) datentechnisch mit der Zusatzeinrichtung (4) verbunden ist und über Datenkommunikation derart beeinflusst werden kann, dass eine Umschaltung des Betriebsmodus vom Inselbetrieb zum Netzparallelbetrieb möglich ist, wobei die Umschaltung des Betriebsmodus - Inselbetrieb/Netzparallelbetrieb- der Erzeugungsanlage (5) so gestaltet wird, dass bei einer fehlerhaften Datenverbindung die Eigenerzeugungsanlage in den Modus für den Netzparallelbetrieb übergeht bzw. in diesem verbleibt.

## Claims

1. Backup power system in the form of a UPS plant, comprising a customer generation plant (5) and a grid monitoring device, further comprising a circuit topology,
a. which comprises a first connection node,
a.1 being connected to the customer generation plant (5),
a.2 being connected to at least one automatic disconnection switch comprising a first switch (411, 412), wherein the first switch (411, 412) is arranged between the customer generation plant (5) and a public grid (1), and
a.3 being connected to a second switch (44), which is connected to one or more loads (6),
b. which comprises a second connection node (9),
b.1 being connected to the second switch (44) on the load side thereof,
b.2 being connected to the load (6),
b.3 being connected to a third switch (43), which is arranged between the public grid (1) and the load (6), and
b.4 being connected to a fourth switch (45), to which an island inverter (7) comprising a storage device (71) is connected,
c. and which comprises a third connection node
c.1 connecting the first switch (411, 412) and the third switch (43) to the public grid (1),
d. wherein the customer generation plant (5) produces an AC voltage which can be connected in parallel with the public grid (1), and wherein the grid monitoring device is provided for opening the first switch (411, 412) in the event of a grid failure of the public grid.

2. Backup power system according to Claim 1, **characterized in that** each switch (411, 412, 43, 44, 45) is integrated in an additional device (4) in such a way that each component is arranged in a suitable box or in one or more switchgear cabinets, and the additional device (4) is connected between the public grid (1) and the customer generation plant (5).

3. Backup power system according to Claim 2, **characterized in that** an island grid detection device is provided, which is embodied in such a way that it controls the coupling of the customer generation plant (5) to the energy electricity grid (1) so that, in the event of a failure of the public grid (1), the additional device (4) can be completely isolated from the public grid.

4. Backup power system according to one of the preceding claims, **characterized by** an embodiment such that a plurality of customer generation plants (5) can be connected in parallel.

5. Backup power system according to one of the preceding claims, **characterized by** an embodiment such that a plurality of island inverters (7) can be connected in parallel.

6. Backup power system according to one of the preceding claims, **characterized by** two connections for two separate energy meters (2, 3), wherein a first meter (2), which is connected to the automatic disconnection switch (42), is provided as feed-in meter (2), and a second meter (3) connected to a fourth switch (43) being arranged between the energy electricity grid (1) and the load (6) is provided as a consumption meter.

7. Backup power system according to one of the preceding claims, **characterized in that** a further, in particular fifth switch (46) is provided for connecting an additional generator (8) to the connection node (9), which additional generator is embodied differently from a generator of the customer generation plant, wherein the generator (8) is preferably a combustion engine generator, in particular a diesel generator.

8. Backup power system according to one of the preceding claims, **characterized in that** the customer generation plant comprises at least one photovoltaic generator comprising at least one DC-to-AC inverter.

9. Backup power system according to one of the preceding claims, **characterized in that** the island inverter (7) is operated with voltage regulation and, as a result, in the event of a failure of the grid, no controller switchover needs to take place.

10. Backup power system according to one of the preceding Claims 2 to 8, **characterized in that** the additional device (4) contains the automatic disconnection switch (42), and therefore the grid monitoring of the customer generation plant can be set in such a way that it can be operated in the grid parallel operating mode as well as in the island operating mode.

11. Backup power system according to one of the preceding Claims 2 to 9, **characterized in that** the additional device (4) comprises an automatic disconnection switch (42), a transfer contactor (43), a contactor (44), a mains voltage measurement (47) and a line current measurement (50).

12. Backup power system according to one of the preceding claims, **characterized in that** the transfer contactor (43) is a two-pole contactor, wherein one pole is designed in such a way that, in the event of a change from the grid parallel operating mode to the island operating mode, the pole of the contactor which is connected to the neutral conductor of the connection node (9) can be switched over from the neutral conductor of the grid (1) to PE.

13. Backup power system according to one of the preceding claims, **characterized in that**, in the island operating mode, the loads (6) can be supplied completely by the customer generation plant (5) as long as the energy generation is greater than or equal to the consumption.

14. Backup power system according to one of the preceding Claims 2 to 12, **characterized in that** the grid monitoring and island grid identification provided in the additional device (4) are based on a passive or active method.

15. Backup power system according to one of the preceding claims, **characterized in that**, in the event of a short circuit in a load circuit during island operation with associated collapse of the voltage at the connection node (9), the contactor (45) remains closed for such a long time that the island inverter (7) can trigger the overcurrent protection element of the load circuit and thus the voltage can be re-established at the connection node (9).

16. Backup power system according to one of the preceding claims, **characterized in that** the island inverter transitions to an energy saving mode after complete charging of the batteries, wherein the island inverter deactivates everything apart from the grid monitoring in order to save energy.

17. Backup power system according to one of the preceding claims, **characterized in that** the transfer contactor (43) is closed as soon as voltage is present in the energy supply grid and the island inverter(s) operate(s) in the charging operating mode or is/are unoperational.

18. Method for operating a system according to one of the preceding claims, **characterized in that** the customer generation plant (5) is connected for data transfer to the additional device (4) and can be influenced via data communication in such a way that switchover of the operating mode from the island operating mode to the grid parallel operating mode is possible, wherein the switchover of the operating mode - island operating mode/grid parallel operating mode - of the customer generation plant (5) is such that, in the case of a faulty data link, the customer generation plant transfers to the mode for the grid parallel operation or remains in this mode.

## Revendications

1. Installation électrique de secours réalisée sous la forme d'un système d'alimentation sans interruption comportant une installation génératrice d'énergie (5) et un dispositif de surveillance du réseau, plus avant qu'une topologie de circuit,
a. comprenant un premier noeud de connexion,
a.1 qui est connecté a l'installation génératrice d'énergie (5),
a.2 qui est connecté à au moins un point de déconnexion automatique comprenant un premier commutateur (411, 412), dans lequel le premier commutateur (411, 412) est disposé entre l'installation génératrice d'énergie (5) et un réseau de distribution d'énergie public (1), et
a.3 qui est connecté à un deuxième commutateur (44), qui est connecté à un ou plusieurs consommateurs (6),
b. comprenant un deuxième noeud de connexion (9),
b.1 qui est connecté au deuxième commutateur (44) du côté consommateur de celui-ci,
b.2 qui est connecté au consommateur (6),
b.3 qui est connecté à un troisième commutateur (43) disposé entre le réseau de distribution d'énergie public (1) et le consommateur (6), et
b.4 qui est connecté à un quatrième commutateur (45) auquel est connecté un onduleur îlot (7) comportant un accumulateur (71),
c. et comprenant un troisième noeud de connexion,
c.1 qui connecte le premier commutateur (411, 412) et le troisième commutateur (43) au réseau de distribution d'énergie public (1),
d. dans lequel l'installation génératrice d'énergie (5) génére une tension alternative pouvant être connectée en parallèle avec le réseau de distribution d'énergie public (1), et le dispositif de surveillance de réseau est prévu pour ouvrir le premier commutateur (411, 412) en cas de défaillance du réseau de distribution d'énergie public.

2. Installation électrique de secours selon la revendication 1,
**caractérisée en ce que** chaque commutateur (411, 412, 43, 44, 45) est intégré à un dispositif additionnel (4) de manière à ce que chaque composant soit disposé dans un boîtier approprié ou dans une ou plusieurs armoires de commande et **en ce que** le dispositif additionnel (4) est connecté entre le réseau de distribution d'énergie public (1) et l'installation génératrice d'énergie (5).

3. Installation électrique de secours selon la revendication 2,
**caractérisée en ce qu'**il est prévu un dispositif de détection de réseau isolé qui est configuré pour commander le couplage de l'installation génératrice d'énergie (5) au réseau de distribution d'énergie (1) de manière à ce que le dispositif additionnel (4) puisse être entièrement séparé du réseau de distribution d'énergie en cas de défaillance du réseau de distribution d'énergie (1).

4. Installation électrique de secours selon l'une quelconque des revendications précédentes,
**caractérisée par** une forme de réalisation dans laquelle une pluralité d'installations génératrices d'énergie (5) peuvent être raccordées en parallèle.

5. Installation électrique de secours selon l'une quelconque des revendications précédentes,
**caractérisée par** une forme de réalisation dans laquelle une pluralité d'onduleurs îlots (7) peuvent être raccordés en parallèle.

6. Installation électrique de secours selon l'une quelconque des revendications précédentes,
**caractérisée par** deux connecteurs destinés à deux compteurs d'énergie séparés (2, 3), dans lequel il est prévu un premier compteur (2) connecté au point de déconnexion automatique (42) en tant que compteur d'alimentation (2) et en ce qu'il est prévu un deuxième compteur (3) qui est connecté à un quatrième commutateur (43) disposé entre le réseau de distribution d'énergie (1) et le consommateur (6) et est réalisé sous la forme d'un compteur de référence.

7. Installation électrique de secours selon l'une quelconque des revendications précédentes,
**caractérisée en ce qu'**il est prévu un autre commutateur (46), notamment un cinquième commutateur, destiné à connecter un générateur de secours (8) au noeud de connexion (9), lequel cinquième commutateur est réalisé d'une manière différente d'un générateur de l'installation génératrice d'énergie, dans lequel le générateur (8) est de préférence un générateur à moteur à combustion, notamment un générateur diesel.

8. Installation électrique de secours selon l'une quelconque des revendications précédentes,
**caractérisée en ce que** l'installation génératrice d'énergie comprend au moins un générateur photovoltaïque comportant au moins un onduleur continu/alternatif.

9. Installation électrique de secours selon l'une quelconque des revendications précédentes,
**caractérisée en ce que** l'onduleur îlot (7) est commandé de manière régulée en tension et par conséquent **en ce qu'**aucun basculement du régulateur ne doit être effectué en cas de disparition du réseau d'alimentation en énergie.

10. Installation électrique de secours selon l'une quelconque des revendications précédentes 2 à 8,
**caractérisée en ce que** le dispositif additionnel (4) comporte le point de déconnexion automatique (42) et par conséquent, **en ce que** le dispositif de surveillance du réseau de l'installation génératrice d'énergie peut être réglé de manière à ce qu'il puisse être mis en fonctionnement aussi bien en mode de fonctionnement en parallèle avec le réseau qu'en mode de fonctionnement isolé.

11. Installation électrique de secours selon l'une quelconque des revendications précédentes 2 à 9,
**caractérisée en ce que** le dispositif additionnel (4) comporte un point de déconnexion automatique (42), un contacteur de transfert (43), un contacteur (44), un dispositif de mesure de tension du réseau (47) et un dispositif de mesure de courant du réseau (50).

12. Installation électrique de secours selon l'une quelconque des revendications précédentes,
**caractérisée en ce que** le contacteur de transfert (43) est un contacteur bipolaire, dans lequel un premier pôle est configuré de manière à ce que, lors du basculement du mode de fonctionnement en parallèle avec le réseau au mode de fonctionnement isolé, le pôle du contacteur qui est connecté au conducteur neutre du point de connexion (9), puisse être amené à basculer du conducteur neutre du réseau (1) au PE.

13. Installation électrique de secours selon l'une quelconque des revendications précédentes,
**caractérisée en ce que**, dans le mode de fonctionnement isolé, les consommateurs (6) peuvent être entièrement alimentés par l'installation génératrice d'énergie (5) tant que la production d'énergie est supérieure ou identique à la consommation.

14. Installation électrique de secours selon l'une quelconque des revendications précédentes 2 à 12,
**caractérisée en ce que** les dispositifs de surveillance du réseau et de détection de réseau isolé présents dans le dispositif additionnel (4) reposent sur un procédé passif ou actif.

15. Installation électrique de secours selon l'une quelconque des revendications précédentes,
**caractérisée en ce que**, en cas de court-circuit dans un circuit électrique de consommateur lors du fonctionnement isolé en association avec une chute de la tension qui lui est connectée au point de connexion (9), le contacteur (45) reste fermé tant que l'onduleur îlot (7) peut déclencher l'organe de protection contre les surintensités du circuit électrique du consommateur et par conséquent, dans la mesure où la tension peut être rétablie au point de connexion (9).

16. Installation électrique de secours selon l'une quelconque des revendications précédentes,
**caractérisée en ce que** l'onduleur îlot passe dans un mode d'économie d'énergie après une charge complète des batteries, dans lequel il déconnecte tout, jusqu'au dispositif de surveillance du réseau.

17. Installation électrique de secours selon l'une quelconque des revendications précédentes,
**caractérisée en ce que** le contacteur de transfert (43) est connecté dès qu'une tension est présente dans le réseau d'alimentation en énergie et que le ou les onduleurs îlots fonctionnent en mode de charge ou ne sont pas aptes à fonctionner.

18. Procédé de mise en fonctionnement d'une installation selon l'une quelconque des revendications précédentes,
**caractérisé en ce que** l'installation génératrice d'énergie (5) est connectée par transfert de données au dispositif additionnel (4) et peut être influencée par une communication de données de manière à ce qu'un basculement du mode de fonctionnement soit possible d'un mode de fonctionnement isolé à un mode de fonctionnement en parallèle avec le réseau, dans lequel le basculement de mode entre les mode de fonctionnement isolé/en parallèle avec le réseau configure l'installation génératrice d'énergie (5) de telle manière que l'installation génératrice d'énergie passe dans le mode destiné au fonctionnement en parallèle avec le réseau ou reste dans ledit mode en cas de défaut de la connexion de données.
